# EUROPÄISCHE PATENTSCHRIFT

(11) **EP 3 711 869 B1**
(45) Veröffentlichungstag und Bekanntmachung des Hinweises auf die Patenterteilung: **02.06.2021**
(21) Anmeldenummer: 19164330.3
(22) Anmeldetag: 21.03.2019
(51) Int. Cl.: B07B 13/00, B07B 13/02, B07B 13/04, B65G 47/14

(54) **SORTIEREINRICHTUNG FÜR TABLETTEN**
SORTING DEVICE FOR TABLETS
DISPOSITIF DE TRI POUR COMPRIMÉS

(43) Veröffentlichungstag der Anmeldung: 23.09.2020
(73) Patentinhaber: Harro Höfliger Verpackungsmaschinen GmbH, 71573 Allmersbach im Tal (DE)
(72) Erfinder: WEIGEL, Marco, 71573 Allmersbach im Tal (DE)
(74) Vertreter: Zurhorst, Stefan

(56) Entgegenhaltungen:
- DE-A1- 2 525 258
- DE-A1-102006 024 072
- FR-A1- 2 548 055

## Beschreibung

Die Erfindung betrifft eine Sortiereinrichtung für Tabletten zum Aussortieren von Mehrfachtabletten.

Bei der Herstellung von Tabletten bzw. von Mikrotabletten insbesondere mit Beschichtung (Coating) kann es prozessbedingt dazu kommen, dass einzelne Exemplare aneinander haften. Eine häufig auftretende Form ist hierbei der Zwilling mit zwei aneinander haftenden Tabletten. Aber auch Drillinge oder größere Agglomerate können vorkommen, was zu unerwünschten Beeinträchtigungen in nachgeschalteten Prozessen führt.

Es hat sich gezeigt, dass größere Agglomerate durch einen Siebprozess ausgeschieden werden können. Jedoch wurde auch erkannt, dass dies bei Zwillingen oder Drillingen nicht mit einer hinreichenden Prozesssicherheit gewährleistet werden kann. Versuche mit Siebstrecken in unterschiedlichen Anordnungen konnten nicht ausschließen, dass Zwillinge in einen nachgeordneten Abfüllprozess gelangen und somit zu Problemen führen.

Bei bestimmten Anwendungen kommt es darauf an, dass nur tatsächlich vereinzelte Tabletten bzw. Mikrotabletten verarbeitet werden. Beispielsweise bei der Abfüllung von Mikrotabletten in Steckkapseln kann der Dosierprozess im Rahmen einer 100%-Kontrolle auf einer Zählung von Einzeltabletten beruhen. In diesem Zusammenhang wurde beobachtet, dass bei einer solchen Zählung mit den bekannten Mitteln das Vorhandensein von Zwillingen nicht sicher erkannt werden kann. Dies führt zu einer Herabsetzung der Ausbringung und kann auch Störungen im Dosieraggregat nach sich ziehen.

FR2548055 offenbart ein Sortiertrommel zum Trennen von gebrochenen von ganzen Tabletten.

Der Erfindung liegt die Aufgabe zugrunde, Prozessstörungen durch Mehrfachtabletten sicher zu vermeiden.

Diese Aufgabe wird durch eine Sortiereinrichtung mit den Merkmalen des Anspruchs 1 gelöst.

Nach der Erfindung ist eine Sortiereinrichtung für Tabletten zum Aussortieren von Mehrfachtabletten vorgesehen, wobei solche Mehrfachtabletten Zwillinge, Drillinge oder größere Agglomerate von zusammenhängenden Tabletten sein können. Da es sich in der Praxis vorrangig um Zwillinge handelt, werden solche Mehrfachtabletten nachfolgend der Einfachheit halber auch Dubletten genannt. Die erfindungsgemäße Sortiereinrichtung weist mehrere Stationen auf, wobei diese Stationen zumindest eine Zuführstation, eine Sortierstation und eine Auswurfstation umfassen. Außerdem weist die Sortiereinrichtung einen in einer Umlaufrichtung die einzelnen Stationen anfahrenden Tablettentransporter auf. Der Tablettentransporter umfasst mindestens eine Reihe von Tablettenaufhahmen für einzelne Tabletten sowie mindestens eine seitlich neben den Tablettenaufhahmen positionierte Dublettenaufnahme für aussortierte Mehrfachtabletten. Eine einzelne Tablettenaufnahme ist mittels einer Seitenwand seitlich von der Dublettenaufnahme abgetrennt. In der Sortierstation ist mindestens ein Sortierzinken vorgesehen, welcher in einer quer zur Umlaufrichtung verlaufenden Seitenrichtung über einen Verfahrweg derart hin und her verfahrbar ist, dass der Sortierzinken dabei den Bereich einer Tablettenaufnahme, der benachbarten Dublettenaufnahme und der zwischenliegenden Seitenwand überstreicht.

Die erfindungsgemäße Sortiereinrichtung macht sich den Umstand zunutze, dass Einzeltabletten vollständig von jeweils einer Tablettenaufnahme aufgenommen werden, während Mehrfachtabletten aufgrund ihrer Größe nach außen über den Rand der

Tablettenaufhahme hervorstehen. Im erwünschten Regelfall, in dem sich eine Einzeltablette in der Tablettenaufnahme befindet, streicht der Sortierzinken wirkungslos über sie hinweg. Die Einzeltabletten verbleiben weiter in ihrer Tablettenaufnahme, bis sie an der Auswurfstation aus der Tablettenaufnahme heraus in den nachgeschalteten Prozess, also beispielsweise einen Dosier- bzw. Zählprozess überführt werden. Landet jedoch eine Mehrfachtablette in einer solchen Tablettenaufnahme, wird ihr überstehender Teil vom Sortierzinken erfasst. Die Mehrfachtablette wird infolge der Seitwärtsbewegung des Sortierzinkens über die Seitenwand der Tablettenaufnahme gekippt und fällt in einer Dreh- bzw. Schwenkbewegung in die benachbarte Dublettenaufnahme. Hierdurch ist eine exakte räumliche Trennung der Dubletten von den Einfachtabletten derart herbeigeführt, dass deren Bewegungsbahnen seitlich versetzt nebeneinander verlaufen. Diese Separation führt dazu, dass alle auf einer Bewegungsbahn an die Auswurfstation herangeführten Tablettenaufnahmen entweder ordnungsgemäße Einfachtabletten beinhalten oder aber leer sind. Jedenfalls können sie keine Dubletten enthalten. Damit ist sichergestellt, dass alle auf dieser Bewegungsbahn ausgeworfenen Tabletten tatsächlich Einfachtabletten sind. Die zuvor mittels des Sortierzinkens separierten Mehrfachtabletten können, da sie auf einer separaten Bewegungsbahn transportiert werden, leicht abgezweigt und entsorgt werden. Prozessstörungen durch Mehrfachtabletten sind sicher vermieden.

Es kann ausreichen, dass nur auf einer Seite der Tablettenaufnahme eine Dublettenaufnahme angeordnet ist. Bevorzugt ist jedoch beidseitig der Tablettenaufnahme je eine Dublettenaufnahme positioniert, wobei der Verfahrweg des Sortierzinkens von einer Dublettenaufnahme zur benachbarten Dublettenaufnahme und die dazwischenliegende Tablettenaufhahme reicht. In zweckmäßiger Weiterbildung sind in der Seitenrichtung abwechselnd mehrere Reihen von Tablettenaufnahmen und Dublettenaufhahmen nebeneinander angeordnet, wobei für jede Reihe von Tablettenaufhahmen je ein Sortierzinken vorgesehen ist. Hierdurch kann der Sortierzinken in beiden Bewegungsrichtungen wirken, was zu einer einfachen Bewegungssteuerung und zu kurzen Taktzeiten beiträgt.

Die hin und her verfahrende Bewegung des mindestens einen Sortierzinkens kann regellos bzw. unabhängig von anderen Bewegungen der Sortiereinrichtung erfolgen. Bevorzugt ist sie jedoch derart mit der umlaufenden Bewegung der Tablettenaufnahmen synchronisiert, dass jede Tablettenaufnahme am Ort der Sortierstation genau einmal von einem Sortierzinken überstrichen wird. Die synchronisierte Bewegung stellt sicher, dass das Auswerfen von Dubletten an exakt einem Ort unter reproduzierbaren Bedingungen erfolgt, was die Prozesssicherheit unterstützt.

Der Sortierzinken ist vorteilhaft elastisch federnd ausgebildet. Hierdurch ist es möglich, den Sortierzinken sehr nahe an der Umfangsfläche des Tablettentransporters zu positionieren, was zu einem sicheren Erfassen der Dubletten beiträgt. Die Schwenkbewegung der Dublette um die Kante der Seitenwand führt trotz des engen Abstandes des Sortierzinkens nicht zu einer Blockade, da der Sortierzinken elastisch federnd nachgeben kann.

In zweckmäßiger Weiterbildung der Erfindung mündet in die Tablettenaufnahme ein Druckkanal. Dabei ist im Bereich der Zuführstation eine Unterdruckquelle bereitgestellt, welche die Tablettenaufhahme über den Druckkanal mit einem Unterdruck zum Ansaugen von Tabletten beaufschlagt. Einerseits können die Tabletten entlang ihres Transportweges sicher in den Tablettenaufnahmen gehalten werden. Andererseits kann die Haltekraft des Unterdrucks beim Aussortieren der Dubletten ohne weiteres überwunden werden, so dass eine zuverlässige Wirkung der Sortierzinken sichergestellt ist.

Vorteilhaft ist im Bereich der Zuführstation mindestens eine Druckluftdüse positioniert und auf die Reihe von Tablettenaufnahmen gerichtet. Insbesondere unter Einwirkung des zuvor beschriebenen Unterdrucks können sich bei der Tablettenzufuhr - unabhängig vom Vorhandensein oder Fehlen von Dubletten - Ansammlungen bzw. Agglomerate von mehreren Tabletten an einer für Einzeltabletten dimensionierten Tablettenaufnahme bilden. Solche Ansammlungen können durch die Druckluftdüse zuverlässig aufgelöst und abgeblasen werden.

Es kann zwar ausreichen, dass die Einzeltabletten an der Auswurfstation allein durch ihre Gewichtskraft aus ihren Tablettenaufnahmen herausfallen. In einer bevorzugten Ausführungsform ist jedoch im Bereich der Auswurfstation eine Überdruckquelle bereitgestellt, welche die Tablettenaufnahme über den Druckkanal mit einem Überdruck zum Ausblasen der Tabletten beaufschlagt. Selbst bei kurzen Taktzeiten ist ein zeit- und ortsgenaues Austreten der Einzeltabletten und damit eine Übergabe in den weiteren Prozess sichergestellt.

Der Tablettentransporter kann als umlaufende Förderkette, Förderband, als Drehteller oder dergleichen ausgebildet sein. Bevorzugt ist er eine drehbare Walze, auf deren Umfang sich die Tablettenaufnahmen und die mindestens eine Dublettenaufnahme befinden. Bei einfachem mechanischem Aufbau können kurze Taktzeiten realisiert werden.

Die Dublettenaufhahme kann ebenso wie die Tablettenaufhahme eine abgetrennte Tasche oder dergleichen sein. Bevorzugt ist sie als umlaufende Nut ausgebildet. Die Nut erleichtert die Abfuhr der aussortierten Dubletten. Außerdem sind an den Ausschwenkvorgang der Dubletten aus den jeweiligen Tablettenaufhahmen heraus keine besonderen Präzisionsanforderungen gestellt. Es reicht, wenn die herausgeschwenkte Dublette irgendwo in der Nut landet.

Ein Ausführungsbeispiel der Erfindung ist nachfolgend anhand der Zeichnungen näher beschrieben. Es zeigen:
- Fig. 1: in einer schematischen, teilweise geschnittenen Seitenansicht eine erfindungsgemäß ausgeführte Sortiereinrichtung mit Tablettenaufnahmen, mit einer Zuführstation, und mit Sortierzinken im Bereich einer Sortierstation zum Aussortieren von Mehrfachtabletten,
- Fig. 2: in einer vergrößerten Schnittdarstellung einen Ausschnitt der Sortiereinrichtung nach Fig. 1 mit Mehrfachtabletten, Sortierzinken und Dublettenaufnahmen,
- Fig. 3: die Anordnung nach Fig. 2 mit einer Mehrfachtablette im Wechselspiel mit einem in einer Seitenrichtung bewegten Sortierzinken, und
- Fig. 4: die Anordnung nach den Fig. 2, 3 mit einer weiteren Mehrfachtablette und mit den Sortierzinken bei einer Rückbewegung.

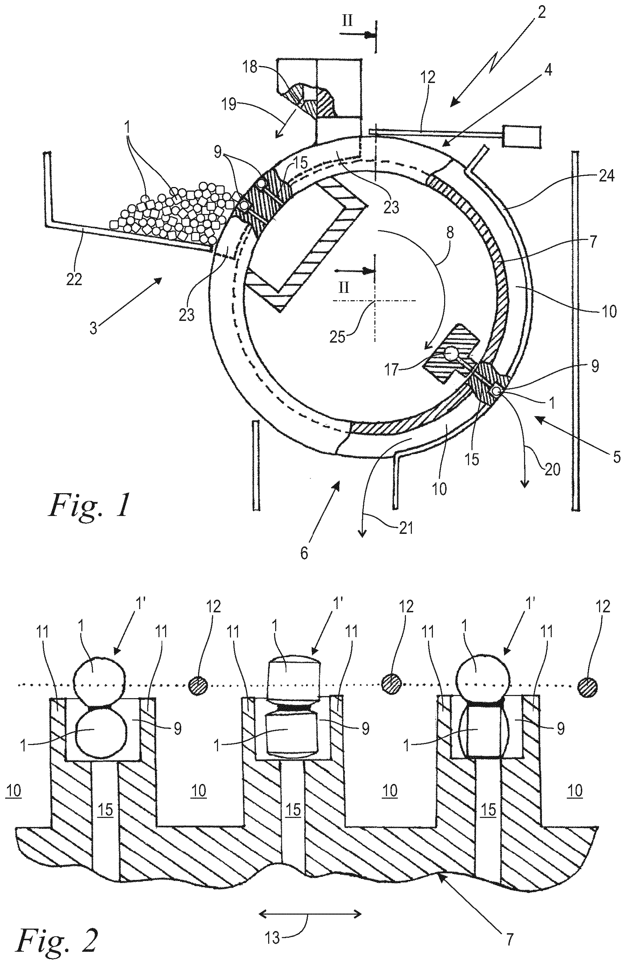

Fig. 1 zeigt in einer schematischen, teilweise geschnittenen Seitenansicht eine erfindungsgemäß ausgeführte Sortiereinrichtung 2. Die Sortiereinrichtung 2 umfasst mehrere Stationen, von denen hier zumindest eine Zuführstation 3, eine Sortierstation 4, und eine Auswurfstation 5 erwähnt sind. In der Zuführstation 3 werden Tabletten 1 der Sortiereinrichtung 2 zugeführt. Ein Tablettentransporter 7 der Sortiereinrichtung 2 fährt die einzelnen Stationen umlaufend in einer Umlaufrichtung 8 ab und fördert dabei die zugeführten Tabletten 1 von der Zuführstation 3 über die Sortierstation 4 zur Auswurfstation 5. Eventuell vorhandene Dubletten bzw. Mehrfachtabletten 1' (Fig. 2, 3, 4) werden in unten näher beschriebener Weise aussortiert, so dass an der Auswurfstation 5 ausschließlich einzelne Tabletten 1 ausgestoßen und dem nachgeschalteten Prozess, namentlich der Abzählung und Dosierung zugeführt werden.

Die erfindungsgemäße Sortiereinrichtung 2 und das zugehörige erfindungsgemäße Sortierverfahren sind hier im Zusammenhang mit Tabletten 1 in Form von beschichteten Mikrotabletten dargestellt, welche im Rahmen einer späteren 100%-Kontrolle gezählt und in vorbestimmter Stückzahl in Steckkapseln abgefüllt werden. Die Erfindung kann aber bei jedweder anderen Form von Tabletten 1 und auch für andere Zwecke zum Einsatz kommen, sofern eine Aussortierung von unerwünschten Mehrfachtabletten 1' gefordert wird.

Der Tablettentransporter 7 ist im gezeigten bevorzugten Ausführungsbeispiel eine Walze, welche im Betrieb um eine horizontale Drehachse 25 drehend angetrieben wird. Es kann aber auch ein Drehteller, ein Förderband oder dergleichen als Tablettentransporter 7 in Betracht kommen. In der Umfangsfläche der Walze sind mindestens eine, hier mehrere in Umfangsrichtung verlaufende und axial gegeneinander versetzte Reihen von Tablettenaufhahmen 9 für einzelne Tabletten 1 eingeformt. Die Tablettenaufnahmen 9 haben die Form einzelner, gegeneinander abgetrennter Taschen, welche radial nach außen offen sind. In den radial inneren Boden einer jeden Tablettenaufnahme 9 mündet optional je ein Druckkanal 15.

An der Zuführstation 3 befindet sich eine Tablettenzuführung 22, in welcher die zu sortierenden Tabletten 1 als loses Schüttgut auf einem geneigten Boden liegen und zur äußeren Umfangsfläche des Tablettentransporters 2 rutschen. Die Rutschbewegung der Tabletten 1 kann durch eine Rüttelbewegung der Tablettenzuführung 22 unterstützt werden. Der Boden der Tablettenzuführung 22 kann als Sieb ausgestaltet sein, durch welches unerwünschte Bestandteile wie loses Pulver oder Tablettenbruchstücke ausgesiebt werden können. Die einzelnen Tabletten 1 landen schließlich in den einzelnen Tablettenaufhahmen 9. Jede einzelne Tablettenaufhahme 9 ist in ihrer Form und Größe derart an die zu sortierenden Tabletten 1 angepasst, dass genau eine Tablette 1 vollständig in genau einer Tablettenaufnahme 9 Platz findet.

Im Bereich der Zuführstation 3 ist eine Unterdruckquelle 16 angeordnet. Die Tablettenaufnahmen 9 werden in der Zuführstation 3 über ihren Druckkanal 15 mit der Unterdruckquelle 16 verbunden, wodurch ihr Innenraum mit Unterdruck beaufschlagt wird. Der Unterdruck bewirkt, dass die einzelnen Tabletten 1 in die Tablettenaufnahmen 9 eingesaugt und dort anfänglich sicher gehalten werden. Im Bereich der Zuführstation 3 befindet sich außerdem mindestens eine Druckluftdüse 18, welche auf eine zugeordnete Reihe von Tablettenaufnahmen 9 gerichtet ist. Im gezeigten Ausführungsbeispiel handelt es sich um eine achsparallel angeordnete Düsenleiste, welche sämtliche Reihen von Tablettenaufnahmen 9 abdeckt, und durch welche Druckluft entsprechend einem Pfeil 19 auf die Tablettenaufnahmen 9 gerichtet wird. Falls das zuvor beschriebene Ansaugen der Tabletten 1 zu größeren Tablettenansammlungen führt, werden diese abgeblasen und landen zurück in der Tablettenzuführung, wobei im Regelbetrieb wie gewünscht jeweils nur eine einzelne Tablette 1 in je einer Tablettenaufnahme 9 verbleibt.

Die einzelnen in ihren Tablettenaufnahmen 9 gehaltenen Tabletten 1 werden in der Umlaufrichtung 8 an der später noch beschriebenen Sortierstation 4 vorbei zur Auswurfstation 5 transportiert. In deren Bereich befindet sich eine Überdruckquelle 17. Für den Vorgang des Ausstoßens werden die Tablettenaufhahmen 9 in der Auswurfstation 5 über ihren Druckkanal 15 mit der Überdruckquelle 17 verbunden, wodurch ihr Innenraum mit Überdruck beaufschlagt wird. Der Überdruck bewirkt, dass die einzelnen Tabletten 1 entsprechend einem Pfeil 20 ausgeblasen werden und durch einen angedeuteten Kanal zur Weiterverarbeitung (Zählung, Dosierung) fallen.

Fig. 2 zeigt in einer vergrößerten Schnittdarstellung einen Ausschnitt der Sortiereinrichtung nach Fig. 1 im Bereich der Sortierstation 4 entlang der in Fig. 1 mit II-II markierten Schnittlinie. In einer achsparallel zur Drehachse 25 (Fig. 1) verlaufenden Seitenrichtung 13 liegen mehrere Reihen von Tablettenaufhahmen 9 nebeneinander. Außerdem ergibt sich aus der Zusammenschau der Fig. 1 und 2, dass in dem Tablettentransporter 7 mindestens eine Dublettenaufnahme 10 in der Seitenrichtung 13 seitlich neben der Umfangsreihe von Tablettenaufnahmen 9 positioniert ist. In der gezeigten bevorzugten Ausführungsform sind in der Seitenrichtung 13 abwechselnd mehrere Reihen von Tablettenaufnahmen 9 und Dublettenaufnahmen 10 nebeneinander angeordnet. Die einzelnen Tablettenaufhahmen 9 sind beidseitig mittels je einer Seitenwand 11 seitlich von den benachbarten Dublettenaufnahmen 10 abgetrennt.

Die Dublettenaufhahmen 10 können ebenso wie die Tablettenaufnahmen 9 individuelle Taschen sein, sind hier jedoch als umlaufende, radial nach außen offene Nuten ausgebildet und axial gegen die Reihen von Tablettenaufhahmen 9 versetzt positioniert. Im Bereich der Zuführstation 3 befindet sich für jede dieser Nuten je ein ortsfest gehaltenes Füllstück 23 (Fig. 1). Die Füllstücke 23 verschließen die Nuten bzw. die Dublettenaufnahmen 10 von der Zuführstation 3 bis zum Beginn der Sortierstation 4, so dass die zugeführten Tabletten 1 ausschließlich in den Tablettenaufnahmen 9, nicht jedoch vorzeitig in den Dublettenaufnahmen 10 landen.

Ab der Sortierstation 4 entsprechend der Querschnittsdarstellung nach Fig. 2 und von dort in der Umlaufrichtung 8 fortlaufend ist der Querschnitt der nutenförmigen Dublettenaufnahmen 10 jedoch frei zur Aufnahme von Mehrfachtabletten 1'. Solche Mehrfachtabletten 1' sind beispielhaft in Fig. 2 dargestellt, demnach einzelne Tabletten 1 beispielweise infolge eines Beschichtungsprozesses in unterschiedlicher Konfiguration aneinander kleben und in die Tablettenaufhahmen 9 gelangen können. Am Beispiel von Zweifachtabletten bzw. Dubletten sind hier drei solcher möglicher Konfigurationen gezeigt. Es können aber auch Dreifachtabletten oder dergleichen auftreten. Der Einfachheit halber wird hier jedoch der Begriff "Dublette" als Synonym für eine beliebige Form einer Mehrfachtablette 1' benutzt, bei der mehrere Einfachtabletten 1 aneinander haften. Jedenfalls steht eine solche Mehrfachtablette 1' radial nach außen über den Rand der jeweiligen Tablettenaufnahme 9 hervor, da letztere in Form und Größe zur Aufnahme nur einer einzelnen Tablette 1 ausgelegt ist.

Zum Aussortieren solcher aus der Tablettenaufnahme 9 hervorstehender Mehrfachtabletten 1' ist in der Sortierstation 4 mindestens ein Sortierzinken 12 vorgesehen, dessen Funktion weiter unten beschrieben wird. Aus der Zusammenschau der Fig. 1, 2 ergibt sich noch, dass im gezeigten bevorzugten Ausführungsbeispiel für jede Umfangsreihe von Tablettenaufnahmen 9 je ein Sortierzinken 12 vorgesehen ist, wobei die einzelnen Sortierzinken 12 für eine gemeinsame Bewegung vergleichbar mit einem Rechen an einem gemeinsamen Träger gehalten sind.

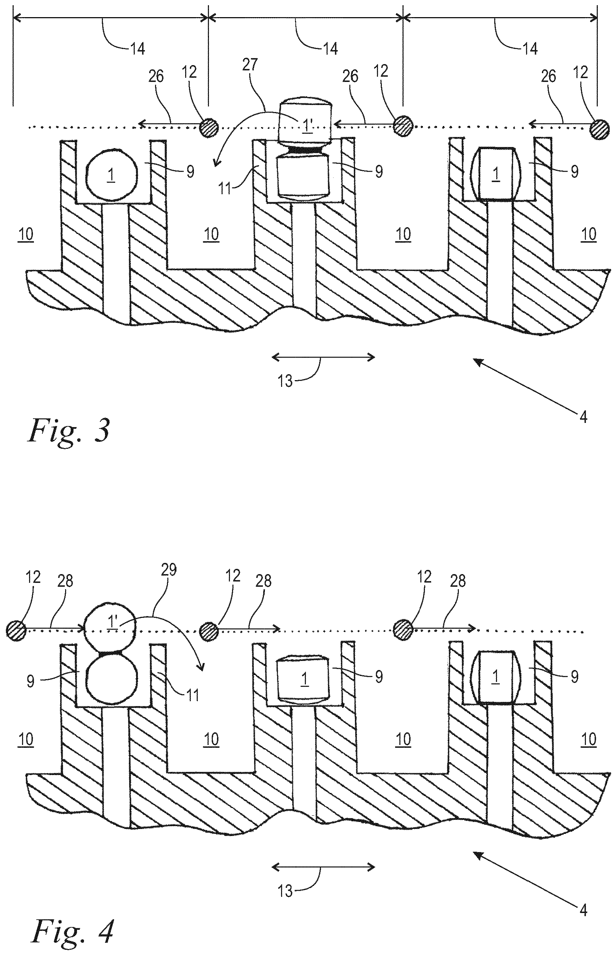

Die Funktion der erfindungsgemäßen Sortiereinrichtung ergibt sich nun unter Beachtung der Fig. 3. Diese zeigt die Anordnung nach Fig. 2 unter realitätsnahen Bedingungen: Eine einzelne Mehrfachtablette 1' befindet sich in einer einzelnen Tablettenaufhahme 9, während die übrigen Tablettenaufnahmen 9 ordnungsgemäße einzelne Tabletten 1 beinhalten. Zum Aussortieren der unerwünschten Mehrfachtablette 1' sind der mindestens eine Sortierzinken 12, hier die Gesamtzahl der Sortierzinken 12 in der quer zur Umlaufrichtung 8 verlaufenden Seitenrichtung 13 über einen Verfahrweg 14 derart hin und her verfahrbar, dass der Sortierzinken 12 dabei mindestens den Bereich einer Tablettenaufnahme 9, der benachbarten Dublettenaufnahme 10 und der zwischenliegenden Seitenwand 11 überstreicht. Im gezeigten Ausführungsbeispiel geht die seitliche Bewegung der Sortierzinken 12 gemäß Fig. 3 zunächst nach links. Diese Seitenbewegung entsprechend einem Pfeil 26 in der ersten, hier linken Richtung beginnt dabei in einer Position etwa mittig über einer Dublettenaufnahme 10 und endet nach dem Überstreichen der Tablettenaufnahme 9 erneut etwa mittig über der gegenüber liegenden Dublettenaufnahme 10. Dabei kommen die einzelnen Sortierzinken 12 in der Startposition des benachbarten Sortierzinkens 12 zur Ruhe.

Die ordnungsgemäßen einzelnen Tabletten 1 bleiben von der vorstehend beschriebenen Bewegung der Sortierzinken 12 unbeeinflusst und verbleiben in ihren Tablettenaufnahmen 9. Derjenige Sortierzinken 12 jedoch, welcher die Tablettenaufnahme 9 mit der Mehrfachtablette 1' überstreicht, kollidiert mit dem überstehenden Teil der Mehrfachtablette 1' und drückt diese seitlich gegen die gegenüberliegende Seitenwand 11. Im weiteren Verlauf der Seitenbewegung wird die Mehrfachtablette 1' über den Rand der Seitenwand 11 entsprechend einem Pfeil 27 aus ihrer Tablettenaufnahme 9 heraus gedreht bzw. geschwenkt und landet in der benachbarten Dublettenaufnahme 10. Die Sortierzinken 12 sind elastisch federnd ausgebildet und können insbesondere in der Hochrichtung, also radial zur Drehachse 25 (Fig. 1) nachgeben, so dass es bei der genannten Schwenkbewegung nicht zu einem Verklemmen von Mehrfachtablette 1', Seitenwand 11 und Sortierzinken 12 kommt.

Es kann ausreichen, die vorstehend beschriebene Aussortierung immer nur in einer Bewegungsrichtung der Sortierzinken vorzunehmen. Aus der Zusammenschau der Fig. 3, 4 ergibt sich jedoch, dass für die Aussortierung bevorzugt die Bewegung der Sortierzinken 12 in beiden Richtungen, also beim Hin- und Her-Verfahren genutzt wird. Fig. 4 zeigt nämlich die Anordnung nach Fig. 3 nach Beendigung der oben beschriebenen Aussortierung und beim Heranführen einer weiteren, anderen Mehrfachtablette 1'. Diesmal erfolgt die Bewegung der Sortierzinken 12 in Gegenrichtung, also von links nach rechts. Im Übrigen ist aber der Ablauf wie zuvor: Die hervorstehende Mehrfachtablette 1' wird durch den entsprechend einem Pfeil 28 seitlich herangeführten Sortierzinken 12 erfasst und über den Rand der gegenüber liegenden Seitenwand 11 entsprechend einem Pfeil 29 in die gegenüberliegende Dublettenaufnahme 10 gedreht.

Im Wechsel der Fig. 3 und 4 findet ein Hin- und Her-Verfahren der Sortierzinken 13 statt. In der hier vorgesehenen bevorzugten Ausgestaltung ist dabei die hin und her verfahrende Bewegung der Sortierzinken 12 derart mit der umlaufenden Bewegung der Tablettenaufhahmen 9 (Fig. 1) synchronisiert, dass mit dem Heranführen jeder Tablettenaufhahme 9 an die Sortierstation 4 je ein Bewegungszyklus nach Fig. 3 oder nach Fig. 4 durchgeführt wird. Es werden also alle unmittelbar aufeinander folgenden Tablettenaufhahmen 9 am Ort der Sortierstation 4 genau einmal von einem Sortierzinken 12 überstrichen.

Unter erneutem Bezug auf Fig. 1 ergibt sich, dass die aus ihren Tablettenaufnahmen 9 herausgedrehten Dubletten durch die nutförmigen Dublettenaufnahmen 10 in der Umlaufrichtung 8 nach unten rutschen können und im unteren Bereich der Sortiereinrichtung 2, räumlich getrennt von den an der Auswurfstation 5 ausgestoßenen ordnungsgemäßen Einzeltabletten, entsprechend einem Pfeil 21 aus einem Dublettenauslass 6 herausfallen und entsorgt werden können. An der Auswurfstation 5 befinden sich jedoch ausschließlich einzelne Tabletten 1 in den Tablettenaufnahmen 9, so dass die hier ausgestoßenen Tabletten 1 frei von Beeinträchtigungen durch Mehrfachtabletten 1' sind.

## Patentansprüche

1. Sortiereinrichtung (2) für Tabletten (1) zum Aussortieren von Mehrfachtabletten (1'), mit mehreren Stationen umfassend eine Zuführstation (3), eine Sortierstation (4) sowie eine Auswurfstation (5), und mit einem in einer Umlaufrichtung (8) die einzelnen Stationen anfahrenden Tablettentransporter (7), wobei der Tablettentransporter (7) mindestens eine Reihe von Tablettenaufhahmen (9) für einzelne Tabletten (1) sowie mindestens eine seitlich neben den Tablettenaufhahmen (9) positionierte Dublettenaufnahme (10) für aussortierte Mehrfachtabletten (1') umfasst, wobei eine einzelne Tablettenaufhahme (9) mittels einer Seitenwand (11) seitlich von der Dublettenaufhahme (10) abgetrennt ist, und wobei in der Sortierstation (4) mindestens ein Sortierzinken (12) vorgesehen ist, welcher in einer quer zur Umlaufrichtung (8) verlaufenden Seitenrichtung (13) über einen Verfahrweg (14) derart hin und her verfahrbar ist, dass der Sortierzinken (12) dabei den Bereich einer Tablettenaufnahme (9), der benachbarten Dublettenaufhahme (10) und der zwischenliegenden Seitenwand (11) überstreicht.

2. Sortiereinrichtung nach Anspruch 1,
**dadurch gekennzeichnet, dass** beidseitig einer Tablettenaufnahme (9) je eine Dublettenaufhahme (10) positioniert ist, und dass der Verfahrweg (14) des Sortierzinkens (12) von einer Dublettenaufnahme (10) zur benachbarten Dublettenaufhahme (10) und die dazwischenliegende Tablettenaufhahme (9) reicht.

3. Sortiereinrichtung nach Anspruch 1 oder 2,
**dadurch gekennzeichnet, dass** in der Seitenrichtung (13) abwechselnd mehrere Reihen von Tablettenaufnahmen (9) und Dublettenaufnahmen (10) nebeneinander angeordnet sind, wobei für jede Reihe von Tablettenaufnahmen (9) je ein Sortierzinken (12) vorgesehen ist.

4. Sortiereinrichtung nach einem der Ansprüche 1 bis 3,
**dadurch gekennzeichnet, dass** die hin und her verfahrende Bewegung des mindestens einen Sortierzinkens (12) derart mit der umlaufenden Bewegung der Tablettenaufnahmen (9) synchronisiert ist, dass jede Tablettenaufnahme (9) am Ort der Sortierstation (4) genau einmal von einem Sortierzinken (12) überstrichen wird.

5. Sortiereinrichtung nach einem der Ansprüche 1 bis 4,
**dadurch gekennzeichnet, dass** der Sortierzinken (12) elastisch federnd ausgebildet ist.

6. Sortiereinrichtung nach einem der Ansprüche 1 bis 5,
**dadurch gekennzeichnet, dass** in die Tablettenaufnahme (9) ein Druckkanal (15) mündet, und dass im Bereich der Zuführstation (3) eine Unterdruckquelle (16) bereitgestellt ist, welche die Tablettenaufhahme (9) über den Druckkanal (15) mit einem Unterdruck zum Ansaugen von Tabletten (1) beaufschlagt.

7. Sortiereinrichtung nach einem der Ansprüche 1 bis 6,
**dadurch gekennzeichnet, dass** im Bereich der Zuführstation (3) mindestens eine Druckluftdüse (18) positioniert und auf die Reihe von Tablettenaufnahmen (9) gerichtet ist.

8. Sortiereinrichtung nach einem der Ansprüche 1 bis 7,
**dadurch gekennzeichnet, dass** in die Tablettenaufnahme (9) ein Druckkanal (15) mündet, und dass im Bereich der Auswurfstation (5) eine Überdruckquelle (17) bereitgestellt ist, welche die Tablettenaufnahme (9) über den Druckkanal (15) mit einem Überdruck zum Ausblasen der Tabletten (1) beaufschlagt.

9. Sortiereinrichtung nach einem der Ansprüche 1 bis 8,
**dadurch gekennzeichnet, dass** der Tablettentransporter (7) eine drehbare Walze ist, auf deren Umfang sich die Tablettenaufnahmen (9) und die mindestens eine Dublettenaufhahme (10) befinden.

10. Sortiereinrichtung nach einem der Ansprüche 1 bis 9,
**dadurch gekennzeichnet, dass** die Dublettenaufnahme (10) als umlaufende Nut ausgebildet ist.

## Claims

1. Sorting device (2) for tablets (1) for separating out multiple tablets (1'), having a plurality of stations comprising a feed station (3), a sorting station (4) and an ejection station (5), and having a tablet transporter (7) which moves to the individual stations in a direction of rotation (8), wherein the tablet transporter (7) comprises at least one row of tablet receivers (9) for single tablets (1) and at least one doublet receiver (10), positioned laterally next to the tablet receivers (9), for multiple tablets (1') which have been separated out, wherein an individual tablet receiver (9) is laterally separated from the doublet receiver (10) by means of a side wall (11), and wherein there is provided in the sorting station (4) at least one sorting tine (12) which can be moved to and fro over a travel range (14) in a lateral direction (13) extending transversely to the direction of rotation (8) in such a manner that the sorting tine (12) thereby passes over the region of a tablet receiver (9), the adjacent doublet receiver (10) and the side wall (11) located between them.

2. Sorting device according to claim 1,
**characterized in that** a doublet receiver (10) is positioned on both sides of a tablet receiver (9), and **in that** the travel range (14) of the sorting tine (12) reaches from one doublet receiver (10) to the adjacent doublet receiver (10) and the tablet receiver (9) located between them.

3. Sorting device according to claim 1 or 2,
**characterized in that** a plurality of rows of tablet receivers (9) and doublet receivers (10) are arranged alternately next to one another in the lateral direction (13), wherein a sorting tine (12) is provided for each row of tablet receivers (9).

4. Sorting device according to one of claims 1 to 3,
**characterized in that** the to and fro movement of the at least one sorting tine (12) is so synchronized with the rotating movement of the tablet receivers (9) that each tablet receiver (9) is passed over precisely once by a sorting tine (12) at the location of the sorting station (4).

5. Sorting device according to one of claims 1 to 4,
**characterized in that** the sorting tine (12) is elastically resilient.

6. Sorting device according to one of claims 1 to 5,
**characterized in that** a pressure channel (15) opens into the tablet receiver (9), and **in that** a low pressure source (16) is provided in the region of the feed station (3), which low pressure source subjects the tablet receiver (9) to a low pressure via the pressure channel (15) in order to suck in tablets (1).

7. Sorting device according to one of claims 1 to 6,
**characterized in that** at least one compressed air nozzle (18) is positioned in the region of the feed station (3) and directed at the row of tablet receivers (9).

8. Sorting device according to one of claims 1 to 7,
**characterized in that** a pressure channel (15) opens into the tablet receiver (9), and **in that** an excess pressure source (17) is provided in the region of the ejection station (5), which excess pressure source subjects the tablet receiver (9) to an excess pressure via the pressure channel (15) in order to blow out the tablets (1).

9. Sorting device according to one of claims 1 to 8,
**characterized in that** the tablet transporter (7) is a rotatable roller on the periphery of which the tablet receivers (9) and the at least one doublet receiver (10) are located.

10. Sorting device according to one of claims 1 to 9,
**characterized in that** the doublet receiver (10) is in the form of a peripheral groove.

## Revendications

1. Dispositif de tri (2) pour comprimés (1) pour l'extraction de comprimés multiples (1'), muni de plusieurs stations comprenant une station d'arrivée (3), une station de tri (4), ainsi qu'une station d'évacuation (5), et muni d'un transporteur de comprimés (7) déplaçant les stations individuelles dans une direction de circulation (8), le transporteur de comprimés (7) comprenant au moins une série de logements de comprimés (9) pour des comprimés individuels (1), ainsi qu'au moins un logement de doublon (10) positionné latéralement à côté des logements de comprimés (9) pour des comprimés multiples extraits (1'), un logement de comprimé individuel (9) étant séparé latéralement du logement de doublon (10) au moyen d'une paroi latérale (11), et au moins une pointe de tri (12) étant prévue dans la station de tri (4), qui est déplaçable en va-et-vient sur une trajectoire de déplacement (14) dans une direction latérale (13) s'étendant perpendiculairement à la direction de circulation (8), de telle sorte que la pointe de tri (12) couvre la zone d'un logement de comprimé (9), du logement de doublon voisin (10) et de la paroi latérale intermédiaire (11).

2. Dispositif de tri selon la revendication 1,
**caractérisé en ce qu'**un logement de doublon (10) est positionné à chaque fois des deux côtés d'un logement de comprimé (9), et **en ce que** la trajectoire de déplacement (14) de la pointe de tri (12) s'étend depuis un logement de doublon (10) jusqu'au logement de doublon voisin (10) et au logement de comprimé intermédiaire (9).

3. Dispositif de tri selon la revendication 1 ou 2,
**caractérisé en ce que** plusieurs séries de logements de comprimés (9) et de logements de doublons (10) sont agencés les unes à côté des autres en alternance dans la direction latérale (13), une pointe de tri (12) étant prévue pour chaque série de logements de comprimés (9).

4. Dispositif de tri selon l'une quelconque des revendications 1 à 3,
**caractérisé en ce que** le mouvement de déplacement en va-et-vient de l'au moins une pointe de tri (12) est synchronisé avec le mouvement de circulation des logements de comprimés (9) de telle sorte que chaque logement de comprimé (9) soit couvert exactement une fois par une pointe de tri (12) à l'emplacement de la station de tri (4).

5. Dispositif de tri selon l'une quelconque des revendications 1 à 4,
**caractérisé en ce que** la pointe de tri (12) est configurée sous forme élastique.

6. Dispositif de tri selon l'une quelconque des revendications 1 à 5,
**caractérisé en ce qu'**un canal de pression (15) débouche dans le logement de comprimé (9), et **en ce qu'**une source de sous-pression (16) est fournie dans la zone de la station d'arrivée (3), qui alimente le logement de comprimé (9) par l'intermédiaire du canal de pression (15) avec une sous-pression pour l'aspiration de comprimés (1).

7. Dispositif de tri selon l'une quelconque des revendications 1 à 6,
**caractérisé en ce qu'**au moins une buse d'air comprimé (18) est positionnée dans la zone de la station d'arrivée (3) et dirigée vers la série de logements de comprimés (9).

8. Dispositif de tri selon l'une quelconque des revendications 1 à 7,
**caractérisé en ce qu'**un canal de pression (15) débouche dans le logement de comprimé (9), et **en ce qu'**une source de surpression (17) est fournie dans la zone de la station d'évacuation (5), qui alimente le logement de comprimé (9) par l'intermédiaire du canal de pression (15) avec une surpression pour l'expulsion des comprimés (1).

9. Dispositif de tri selon l'une quelconque des revendications 1 à 8,
**caractérisé en ce que** le transporteur de comprimés (7) est un cylindre rotatif, sur la périphérie duquel se trouvent les logements de comprimés (9) et l'au moins un logement de doublon (10).

10. Dispositif de tri selon l'une quelconque des revendications 1 à 9,
**caractérisé en ce que** le logement de doublon (10) est configuré sous la forme d'une rainure circonférentielle.
